Europäisches Patentamt

European Patent Office

Office européen des brevets

(19)

(11) Numéro de publication : **0 442 802 B1**

(12) **FASCICULE DE BREVET EUROPEEN**

(45) Date de publication du fascicule du brevet :
**03.05.95 Bulletin 95/18**

(51) Int. Cl.$^6$ : **G02F 1/295, G02F 1/225**

(21) Numéro de dépôt : **91400347.0**

(22) Date de dépôt : **12.02.91**

(54) **Séparateur de polarisations pour lumière guidée.**

(30) Priorité : **14.02.90 FR 9001742**

(43) Date de publication de la demande :
**21.08.91 Bulletin 91/34**

(45) Mention de la délivrance du brevet :
**03.05.95 Bulletin 95/18**

(84) Etats contractants désignés :
**DE GB**

(56) Documents cités :
**EP-A- 0 361 152
FR-A- 2 633 060
ELECTRONICS LETTERS, vol. 24, no. 9, 28
avril 1988, pp. 530-531; T. POHLMANN et al.:
"Ti: LiNb03 interferometric activated X-switch
for high-speed applications: IAX"
PATENT ABSTRACTS OF JAPAN, vol. 6, no.
104 (P-122)[982], 15 juin 1982; & JP-A-57 037
328**

(56) Documents cités :
**APPL. PHYS. LETT., vol. 51, no. 10, 7 septembre 1987, pp. 716-718; J.L. NIGHTINGALE et al:
"Characterization of frequency dispersion in
Ti-indiffused lithium niobate optical devices"
PATENT ABSTRACTS OF JAPAN, vol. 13, no.
583 (P-981), 22 décembre 1989 ; & JP-A-1 246
529**

(73) Titulaire : **FRANCE TELECOM
Etablissement autonome de droit Public
(Centre National d'Etudes des
Télécommunications),
38/40 rue du Général Leclerc
F-92131 Issy les Moulineaux (FR)**

(72) Inventeur : **Riviere, Luc
21, rue de Gonelle
F-06560 Valbonne Sophia Antipolis (FR)**

(74) Mandataire : **Dubois-Chabert, Guy et al
c/o BREVATOME
25, rue de Ponthieu
F-75008 Paris (FR)**

## Description

La présente invention concerne un séparateur de polarisations pour lumière guidée.

Elle trouve des applications en Optique Intégrée, par exemple dans le domaine des capteurs à fibres optiques (capteurs de champ électrique et capteurs de température par exemple) ou dans le domaine de la transmission cohérente d'informations par fibres optiques monomodes ou encore dans le domaine des gyroscopes optiques, domaines dans lesquels l'état de polarisation des ondes optiques utilisées est un paramètre très important.

Dans ces domaines, les séparateurs de polarisations ("polarization beam splitters" selon la terminologie anglo-saxonne) sont des dispositifs essentiels qui permettent la séparation spatiale des modes transverse-électrique TE et transverse-magnétique TM des ondes optiques utilisées.

On connaît déjà divers séparateurs de polarisation pour lumière guidée, réalisés sur des matériaux uniaxes électro-optiques et en particulier sur LiNbO$_3$:Ti.

Sur ce dernier matériau dont les axes cristallographiques sont classiquement notés X, Y et Z, les axes X et Y correspondant tous deux à l'indice ordinaire du matériau tandis que l'axe Z correspond à l'indice extraordinaire de ce matériau, on a déjà réalisé :
- des coupleurs directionnels dans des configurations de propagation suivant l'axe X ou suivant l'axe Y (voir le document (1) qui, comme les autres documents cités par la suite, est mentionné à la fin de la présente description),
- des dispositifs utilisant des techniques d'interférence à deux modes (voir le document (2)),
- des structures à embranchements en Y (voir le document (3)), et
- des séparateurs comportant des parties de guide d'onde à ions échangés (voir le document (4)).

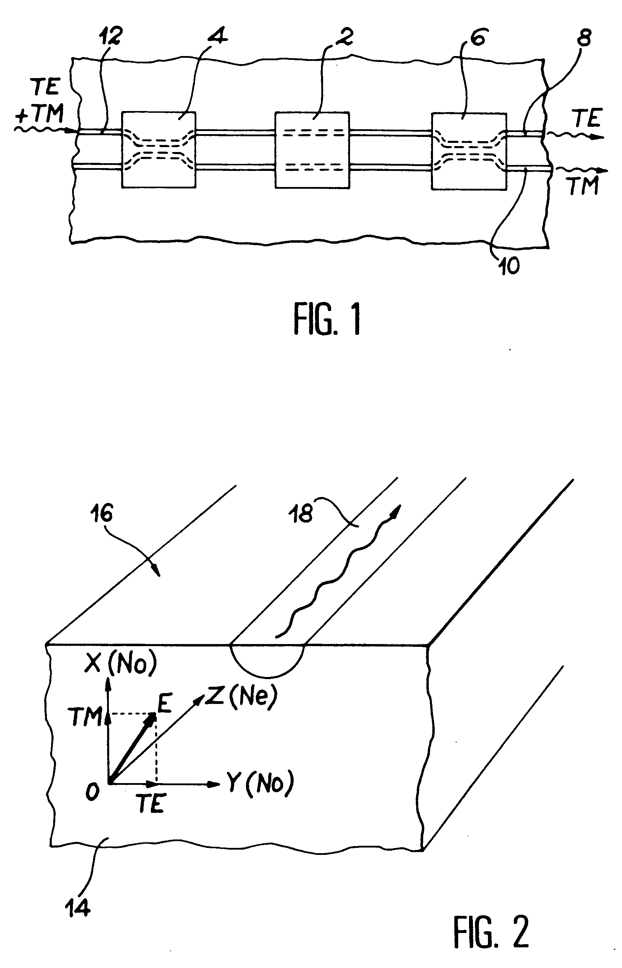

On connaît aussi par le document (5), un séparateur de polarisations qui est schématiquement représenté sur la figure 1.

Ce séparateur connu comprend un déphaseur 2 qui relie l'un à l'autre deux coupleurs directifs 3dB portant les références 4 et 6.

En polarisant convenablement ce séparateur connu, on peut obtenir respectivement aux deux sorties 8 et 10 du coupleur 6 les modes TE et TM d'une onde lumineuse d'entrée qui arrive à l'une 12 des deux entrées du coupleur 4.

Ce séparateur connu présente des inconvénients :
- il nécessite un interféromètre de Mach-Zehnder employant un déphaseur de type passif, qui introduit, entre les guides, un déphasage identique pour les deux polarisations TE et TM, un tel déphaseur passif étant par exemple obtenu par modification locale de la largeur d'un guide optique comme on le verra par la suite, et
- il ne permet pas de supprimer les déphasages qui se produisent entre les deux ondes de sortie des coupleurs 4 et 6 lorsqu'on agit sur ces derniers, supposés actifs, pour les mettre dans l'état 3dB.

La présente invention a pour but de remédier à ces inconvénients.

A cet effet, le séparateur objet de la présente invention comporte en entrée, non pas un coupleur 3dB, mais un embranchement en Y ("Y-junction" selon la terminologie anglo-saxonne).

On connaît par l'Article de T. POHLMAN et al. publié dans ELECTRONICS LETTERS, vol.24, n°9, avril 1988, pages 530 à 531, un commutateur optique qui peut comprendre un embranchement en Y passif suivi par un interféromètre qui est lui-même suivi par un coupleur 3dB actif.

De façon précise, la présente invention a pour objet un séparateur de polarisations pour lumière guidée, réalisé sur un substrat, séparateur caractérisé en ce qu'il comprend :
- un embranchement en Y passif, à une entrée et deux sorties, apte à séparer en deux ondes de même amplitude et en phase entre elles, une onde lumineuse d'entrée qui arrive à l'entrée de l'embranchement en Y et qui est une combinaison de deux modes optiques guidés, à savoir un mode transverse électrique TE et un mode transverse magnétique TM,
- un déphaseur actif à deux bras comportant des électrodes et ayant respectivement deux entrées, qui prolongent respectivement les deux sorties de l'embranchement en Y, et deux sorties, ce déphaseur étant apte à induire un déphasage F du mode TE qui se propage dans un des bras par rapport au mode TE qui se propage dans l'autre bras et un déphasage -F du mode TM qui se propage dans ledit bras par rapport au mode TM qui se propage dans ledit autre bras, le substrat étant fait d'un matériau qui permet d'induire des variations opposées DN et -DN respectivement sur l'indice de réfraction associé au mode TE et sur l'indice de réfraction associé au mode TM, et
- un coupleur directif actif, indépendant de la polarisation, apte à constituer un coupleur 3 dB, par une polarisation appropriée des électrodes que comporte ce coupleur, et ayant deux entrées, qui prolongent respectivement les deux sorties du déphaseur, et deux sorties,

de sorte que, lorsque le coupleur constitue un coupleur 3 dB, on obtient le mode TM de l'onde d'entrée à l'une des deux sorties du coupleur et le mode TE de cette onde d'entrée à l'autre sortie du coupleur en polarisant convenablement les électrodes que comporte le déphaseur.

Le coupleur étant actif, il est donc possible de le placer dans un état 3dB au cas où il ne serait pas exactement dans cet état en l'absence de polarisation.

Dans la présente invention,
- on évite l'utilisation d'un déphaseur passif, identique pour les deux polarisations TE et TM, et
- comme le coupleur de sortie est un coupleur actif, lorsqy'il est mis dans un état 3dB par polarisation convenable de ce coupleur, on peut compenser le déphasage indésirable qui apparaît alors entre les deux sorties de ce coupleur, en ajustant convenablement la polarisation du déphaseur.

Le déphaseur utilisé dans la présente invention peut avoir une structure push-pull.

Le séparateur objet de la présente invention peut être muni de moyens de commande permettant de commuter les modes TM et TE respectivement obtenus aux sorties du coupleur.

Les variations des indices de réfraction respectivement associés au mode TE et au mode TM peuvent être induites par un effet électro-optique.

Selon un mode de réalisation particulier du séparateur objet de l'invention, le matériau du substrat est choisi parmi les matériaux appartenant au groupe de symétrie cristalline trigonal 3 m, le matériau du substrat étant ainsi un matériau uniaxe électro-optique ayant trois axes cristallographiques X, Y, Z perpendiculaires les uns aux autres, les axes X et Y correspondant tous deux à l'indice ordinaire No du matériau tandis que l'axe Z correspond à l'indice extraordinaire Ne de ce matériau, la face du substrat, sur laquelle est formé le séparateur, est perpendiculaire à l'un des axes X et Y et le séparateur est formé de telle façon que la lumière guidée se propage parallèlement à l'axe Z dans ce séparateur.

Dans le groupe mentionné ci-dessus, on peut choisir $LiNbO_3$.

On réalise alors le séparateur sur $LiNbO_3$ propagation Z, coupe X ou coupe Y ("X-cut or Y-cut, Z-propagating $LiNbO_3$" selon la terminologie anglo-saxonne) -voir document (6).

Une telle configuration permet une réduction importante de la biréfringence modale et facilite l'intégration, sur le même substrat, du séparateur de polarisations et de convertisseurs de polarisations dont la structure des électrodes se trouve alors considérablement simplifiée, par rapport aux configurations en propagation X ou en propagation Y.

L'embranchement en Y, le déphaseur et le coupleur peuvent alors être réalisés par diffusion locale de Ti, échange ionique ou implantation, dans $LiNbO_3$.

La présente invention sera mieux comprise à la lecture de la description d'exemples de réalisation donnés ci-après à titre purement indicatif et nullement limitatif, en référence aux dessins annexés sur lesquels :
- la figure 1 est une vue schématique d'un séparateur de polarisations connu et a déjà été décrite,
- la figure 2 est une vue en coupe schématique d'un matériau utilisable dans la présente invention,
- la figure 3 est une vue de dessus schématique d'une structure comprenant en série un embranchement en Y, un déphaseur mixte et un coupleur directif, permettant l'analyse théorique de l'invention,
- la figure 4 est une vue de dessus schématique et partielle d'un déphaseur actif,
- la figure 5 est une vue de dessus schématique et partielle d'un déphaseur passif,
- la figure 6 est une vue de dessus schématique et partielle d'un déphaseur mixte,
- la figure 7 représente une partie du diagramme de commande d'un coupleur directif utilisable dans la présente invention,
- la figure 8 est une vue de dessus schématique d'un mode de réalisation particulier du séparateur de polarisations objet de la présente invention,
- la figure 9 illustre schématiquement la possibilité de réaliser un séparateur conforme à l'invention sur un matériau du genre $LiNbO_3$ en coupe X, propagation Z,
- la figure 10 illustre schématiquement la possibilité de réaliser un séparateur conforme à l'invention sur un matériau du genre $LiNbO_3$ en coupe Y, propagation Z, et
- la figure 11 est une vue en coupe schématique d'un autre matériau utilisable dans la présente invention.

La figure 2 est une vue en coupe schématique d'un substrat 14 fait d'un matériau uniaxe électro-optique sur lequel il est possible de réaliser un séparateur conforme à la présente invention.

Ce matériau a trois axes cristallographiques X, Y et Z.

Chacun de ces axes est perpendiculaire aux deux autres.

De plus, chacun des axes X et Y correspond à l'indice ordinaire No du matériau tandis que l'axe Z correspond à l'indice extraordinaire Ne de ce matériau.

La face 16 du substrat 14, sur laquelle le séparateur est réalisé, est perpendiculaire soit à l'axe X soit à l'axe Y.

Dans le cas de la figure 2, le séparateur est réalisé sur une face qui est perpendiculaire à l'axe X.

On voit sur cette figure 2 une partie 18 d'un guide d'onde que comporte le séparateur et qui est réalisé par diffusion localisée d'une matière appropriée, par échange ionique ou par implantation, dans le substrat 14.

Le champ électrique E d'une onde lumineuse qui arrive dans le séparateur est, de façon classique, considéré comme la somme de deux modes TE et TM perpendiculaires l'un à l'autre et perpendiculaires à la direction de propagation de l'onde lumineuse qui, dans le cas présent, est parallèle à l'axe Z.

De plus, on sait que le mode TE est parallèle à la face 16 du substrat tandis que le mode TM est perpendiculaire à cette face 16.

Donc, dans le cas où la face 16 est perpendiculaire à l'axe X (cas de la figure 2), le mode TE est compté sur l'axe Y et le mode TM est compté sur l'axe X.

Bien entendu, au cas où la face du substrat sur laquelle est réalisé le séparateur serait perpendiculaire à l'axe Y, le mode TE serait compté sur l'axe X et le mode TM serait compté sur l'axe Y.

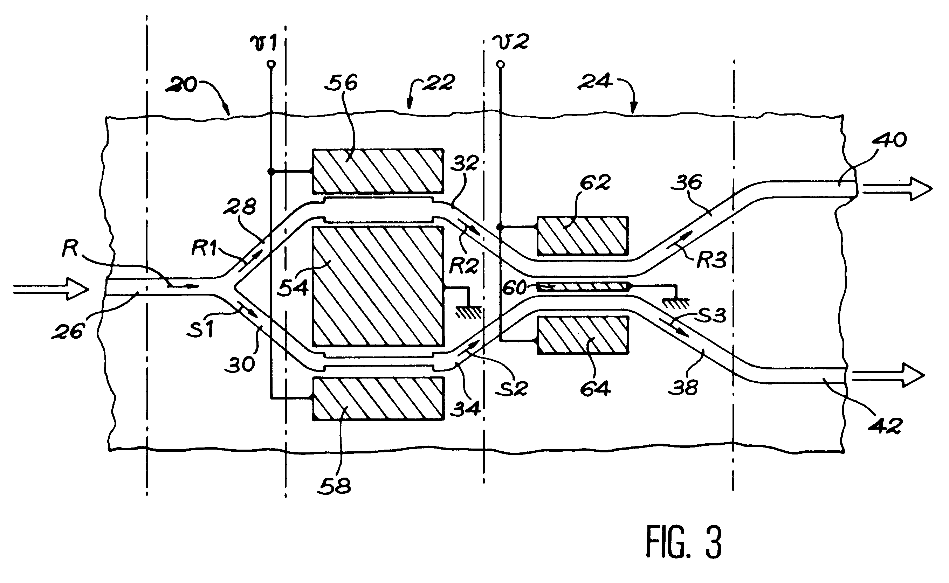

Sur la figure 3, on a représenté schématiquement et en vue de dessus une structure permettant l'analyse théorique de l'invention, cette structure étant réalisée par LiNbO$_3$ coupe X, propagation Z.

La structure représentée sur cette figure 3 comprend successivement un embranchement en Y qui porte la référence 20, un déphaseur 22 et un coupleur directif 24.

L'embranchement en Y 20 comporte une entrée 26 et deux sorties 28 et 30 qui sont respectivement raccordées aux deux entrées que comporte le déphaseur 22.

Ce dernier comporte deux sorties 32 et 34 qui correspondent respectivement aux deux entrées 28 et 30 et qui sont respectivement raccordées aux deux entrées du coupleur directif 24.

Ce coupleur 24 comporte deux sorties 36 et 38 qui correspondent respectivement aux deux sorties 32 et 34 comme on le voit sur la figure 3.

Une onde lumineuse est envoyée à l'entrée 26 de l'embranchement en Y 20.

Cette onde lumineuse peut provenir d'une fibre optique non représentée et être injectée dans l'entrée 26 de l'embranchement en Y par l'intermédiaire d'une optique appropriée, ou provenir d'un guide d'onde non représenté qui est réalisé sur la même face du matériau que le séparateur et qui est prolongé par l'entrée 26 de l'embranchement en Y 20.

La structure de la figure 3 constituerait un séparateur de polarisations si les deux modes TE et TM de l'onde lumineuse guidée étaient respectivement disponibles aux deux sorties du coupleur directif 24.

On voit sur la figure 3 que les deux sorties 36 et 38 de ce coupleur 24 peuvent être respectivement raccordées à deux guides d'onde 40 et 42 qui sont réalisés sur la même face que la structure de la figure 3.

La structure qui est représentée sur la figure 3 est la plus générale possible.

Le coupleur directif 24 qu'elle comporte est un coupleur actif.

On peut d'ailleurs considérer qu'un coupleur directif passif est un coupleur actif non polarisé électriquement.

Le déphaseur 22 est un déphaseur mixte, combinaison d'un déphaseur actif et d'un déphaseur passif.

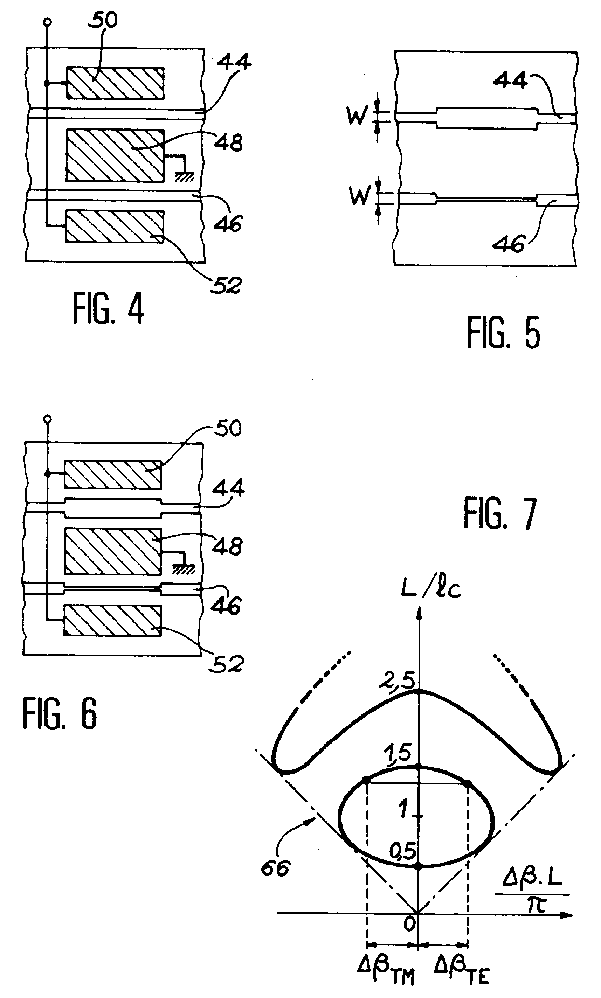

On rappelle à ce propos qu'un déphaseur comporte, sur un substrat approprié, deux guides optiques 44 et 46 (figures 4 à 6) qui sont parallèles et suffisamment éloignés l'un de l'autre pour qu'on puisse négliger tout couplage entre eux, c'est-à-dire tout transfert d'énergie lumineuse d'un guide à l'autre, pour une longueur de propagation de quelques centimètres.

En revanche, un déphasage entre les ondes se propageant respectivement dans les deux guides optiques peut être introduit par effet électro-optique (figure 4).

A cet effet, on prévoit une électrode 48 entre les deux guides 44 et 46 et deux électrodes 50 et 52 de part et d'autre de l'ensemble formé par les guides 44 et 46 et l'électrode 48. On parle alors de "déphaseur actif".

Le déphasage entre les deux ondes peut être obtenu par une modification de la configuration des guides, en particulier de leur largeur w (figure 5).

Il n'y a alors plus d'électrode et, sur le substrat, dans la zone où se trouve le déphaseur, la largeur de l'un des deux guides est augmentée tandis que dans cette zone, la largeur de l'autre guide est diminuée, comme on le voit sur la figure 5. On parle alors de "déphaseur passif".

On peut aussi combiner un déphaseur actif et un déphaseur passif (figure 6). On parle alors de "déphaseur mixte".

Dans ce cas, le déphaseur comporte les électrodes 48, 50 et 52 ; de plus, les guides 44 et 46 ont des largeurs différentes dans la zone du déphaseur, comme on l'a vu dans le cas de la figure 5.

On précise que pour faire fonctionner le déphaseur de la figure 4 comme le déphaseur de la figure 6, on applique une tension électrique appropriée entre l'électrode 48 et l'électrode 50 et une tension électrique appropriée entre l'électrode 48 et l'électrode 52.

On peut par exemple porter l'électrode 48 à la masse et porter les électrodes 50 et 52 à un même potentiel approprié.

En revenant à la figure 3, on voit sur cette figure les électrodes 54, 56 et 58 du déphaseur (supposé mixte dans le cas le plus général), qui sont respectivement les homologues des électrodes 48, 50 et 52 des figures 4 et 6.

Pour faire fonctionner le déphaseur 22, on peut par exemple mettre l'électrode 54 à la masse et porter les électrodes 56 et 58 à un potentiel v1 approprié.

On voit aussi sur la figure 3 que le coupleur 24, qui dans le cas le plus général est un coupleur actif, comprend une électrode 60 comprise entre les deux guides optiques qu'il comporte et deux électrodes 62 et 64 qui sont situées de part et d'autre de l'ensemble formé par l'électrode 60 et les deux guides du coupleur 24.

Pour faire fonctionner ce coupleur 24, on peut mettre l'électrode 60 à la masse et porter les électrodes 62 et 64 à un potentiel approprié v2.

En revenant au séparateur objet de l'invention, un fonctionnement correct de ce séparateur nécessite que l'état 3dB du coupleur qu'il comporte soit obtenu à la fois pour la polarisation TE et pour la polarisation TM de l'onde lumineuse guidée par ce séparateur.

Une condition de fonctionnement correct est donc que le coupleur 3dB soit indépendant de la polarisation.

En supposant que la longueur de couplage lc relative à TE et la longueur de couplage lc relative à TM sont égales et que le recouvrement entre le champ électrique de l'onde électromagnétique et le champ électrique que l'on applique grâce aux électrodes du coupleur est le même pour les deux polarisations TE et TM, cette condition est automatiquement réalisée pour des coupleurs en configuration de propagation suivant l'axe Z : les coefficients électro-optiques r12 et r22 étant opposés, les points figuratifs du diagramme de commande (figure 7) correspondant à l'état du coupleur pour les polarisations TE et TM sont symétriques par rapport à l'axe des ordonnées.

On rappelle que, dans un diagramme de commande, on porte en abscisses le paramètre (delta beta .L/pi) où pi est le nombre bien connu qui vaut environ 3,1416, L est la longueur des électrodes et delta beta est la différence entre les constantes de propagation associées aux modes de propagation symétrique et antisymétrique du coupleur.

Sur l'axe des ordonnées, on porte la quantité L/lc.

Le lieu 66 (figure 7) des états 3dB possédant lui aussi une symétrie par rapport à l'axe des ordonnées, on peut en déduire qu'une polarisation du coupleur permettant d'atteindre un état 3dB pour une polarisation (TE ou TM) permet également d'obtenir un état 3dB pour l'autre polarisation.

Revenant à la figure 3, on va maintenant analyser le fonctionnement de la structure représentée sur cette figure.

L'onde optique, qui est injectée dans cette structure et qui est représentée par un vecteur R, comporte deux composantes vibratoires selon les polarisations TE et TM du guide optique de la structure, composantes qui sont respectivement notées ATE et ATM.

On peut ainsi écrire :

$$R = (ATM ; ATE)$$

L'embranchement en Y fournit ainsi aux deux entrées du déphaseur 22 deux ondes que l'on représente par des vecteurs R1 et S1 et qui ont la même amplitude et sont en phase, l'onde R1 correspondant à la sortie 28 de l'embranchement en Y et l'onde S1 correspondant à la sortie 30 de l'embranchement en Y.

On peut écrire :

$$R1 = S1 = 2^{-1/2}(ATM ; ATE)$$

Le déphaseur, sous sa forme la plus générale qui associe un effet de phase passif et un effet de phase actif, affecte quatre déphasages différents et ajustables indépendamment les uns des autres aux quatre composantes des ondes R1 et S1.

Ces déphasage sont notés a, b, c et d.

Les ondes obtenues respectivement aux sorties 32 et 34 du déphaseur peuvent être représentées respectivement par deux vecteurs R2 et S2 qui sont définis par les formules suivantes :

$$R2 = 2^{-1/2}(ATM.e^{ja} ; ATE.e^{jb})$$
$$S2 = 2^{-1/2}(ATM.e^{jc} ; ATE.e^{jd})$$

où le nombre j est tel que : $j^2 = -1$.

Le coupleur 3dB de sortie est caractérisé par un facteur de phase f et réalise un mélange des composantes TE de R2 et S2 entre elles ainsi qu'un mélange des composantes TM de R2 et S2 entre elles, avec une pondération par le facteur de phase f.

Alors, le vecteur R3 associé à l'onde lumineuse disponible à la sortie 36 du coupleur 24 et le vecteur S3 associé à l'onde lumineuse disponible à la sortie 38 de ce coupleur 24 sont donnés par les formules suivantes, tirées de la théorie des ondes couplées, appliquée au coupleur directif :

$$R3 = 2^{-1} (ATM.e^{ja}(e^{jf} - e^{j(c-a+pi/2)}) ;$$
$$ATE.e^{j(d-f)}(e^{j(b-d-pi/2)} - e^{jf}))$$
$$S3 = 2^{-1}( - jATM.e^{j(a-f)}(e^{jf} - e^{j(c-a-pi/2)}) ;$$
$$ATE.e^{jd}(e^{jf} - e^{j(b-d+pi/2)}))$$

Les deux cas où la séparation de polarisations peut avoir lieu correspondent à :

1) composante TE à la sortie 36 (R3) et composante TM à la sortie 38 (S3) :

$$f = c - a + pi/2 \text{ (modulo 2 pi)}$$
$$= b - d + pi/2 \text{ (modulo 2 pi)}$$

2) composante TM à la sortie 36 (R3) et composante TE à la sortie 38 (S3) :

$$f = c - a - pi/2 \text{ (modulo 2 pi)}$$
$$= b - d - pi/2 \text{ (modulo 2 pi)}$$

On peut remarquer :

- que la condition

$$c - a = b - d$$

qui doit être vérifiée dans tous les cas, est caractéristique d'un déphaseur actif,

- qu'il est possible d'utiliser en sortie un coupleur passif, qui est tel que f = 0, ce qui conduit à : c - a = b - d = pi/2 (modulo 2 pi),

- que le choix, pour un déphaseur actif, d'une structure push-pull (différences de potentiel de même amplitude et de signes opposés sur les deux voies du déphaseur) implique les conditions supplémentaires :

$$a = d \text{ et } b = c.$$

On aboutit ainsi à :

$$a = d = -b = -c = \pm pi/4 \text{ (modulo 2 pi)}.$$

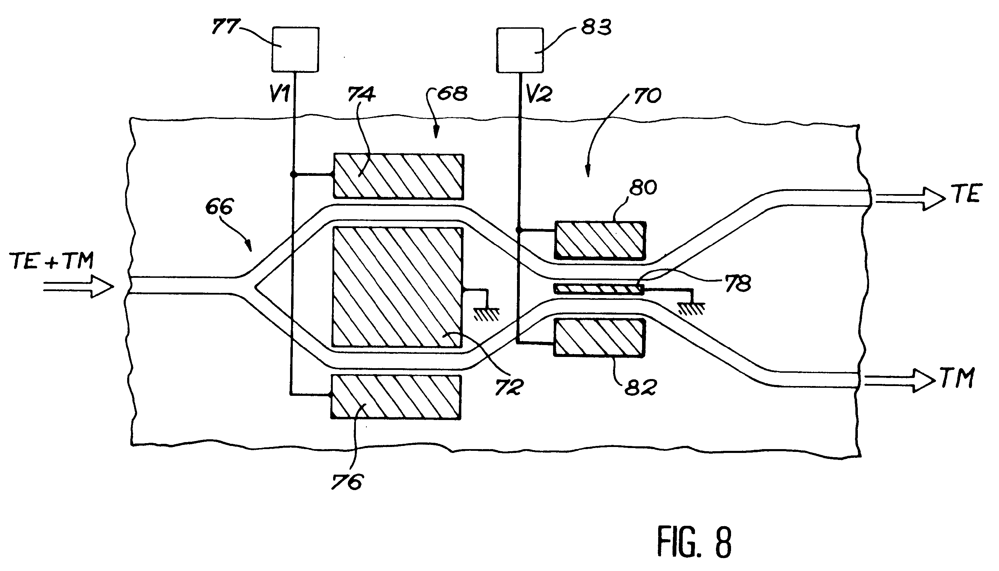

Ceci correspond à un séparateur de polarisations que l'on obtiendrait à partir du mode de réalisation particulier de l'invention, représenté schématiquement en vue de dessus sur la figure 8, et qui comporterait un coupleur passif et donc sans électrodes.

Les électrodes représentées sur la figure 8 correspondent à ce mode de réalisation particulier dans lequel le coupleur est actif et qui sera expliqué par la suite.

Plus précisément, le séparateur représenté sur la figure 8 est réalisé sur LiNbO$_3$ coupe X, propagation Z et comprend un embranchement en Y 66 qui sépare l'onde d'entrée en deux parties égales et en phase entre elles pour envoyer ces deux parties de l'onde d'entrée respectivement dans les deux bras d'un déphaseur actif 68.

Comme on le voit sur la figure 8, ce déphaseur 68 comprend une électrode centrale 72 et deux électrodes d'extrémité 74 et 76, les deux guides du déphaseur 68 passant respectivement entre les électrodes 72 et 74 et entre les électrodes 72 et 76.

Le déphaseur 68 est commandé par des moyens appropriés 77 qui sont prévus pour porter les électrodes 74 et 76 à un potentiel V1 approprié, l'électrode 72 étant mise à la masse.

Le potentiel V1 est un potentiel qui induit des déphasages imposés entre les modes TE et TM de l'onde d'entrée.

Ces modes TE et TM sont ensuite combinés dans un coupleur directif 3dB 70 dont les deux bras d'entrée sont respectivement reliés aux deux bras du déphaseur, et des effets d'interférence réalisent la séparation spatiale entre le mode TE et le mode TM qui sont alors disponibles respectivement aux deux sorties du coupleur 70.

Dans le mode de réalisation particulier de l'invention, le coupleur 70 est un coupleur actif comportant une électrode centrale 78 qui se trouve entre les deux guides optiques de ce coupleur et deux électrodes 80 et 82 qui sont situées de part et d'autre de l'ensemble comprenant ces deux guides du coupleur et l'électrode 78.

Pour commander un tel coupleur actif, on peut utiliser des moyens de commande appropriés 83 qui permettent de porter les électrodes 80 et 82 à un potentiel approprié V2, l'électrode 78 étant mise à la masse.

L'utilisation d'un coupleur actif confère au séparateur qui est conforme à l'invention et que l'on a représenté sur la figure 8 une possibilité de réglage supplémentaire dans le cas où l'état passif du coupleur (V2 = 0) n'est pas exactement un état 3dB.

Le diagramme de commande du coupleur montre en effet que, si le rapport L/lc vérifie la double inégalité

$$n + 0{,}5 \leqq L/lc \leqq n + 1{,}5$$

où n est un entier naturel, il est toujours possible d'atteindre un état 3dB par application d'une tension, c'est-à-dire en faisant varier le paramètre delta beta, à L/lc constant.

Toutefois, la modification du paramètre delta beta, que l'on a introduite, entraîne une variation Df du déphasage f caractéristique du coupleur.

L'intérêt de l'invention est qu'il est possible de compenser cette variation en jouant sur la tension que l'on applique au déphaseur actif 68.

En effet, en notant a0, b0, c0 et d0 les valeurs respectives de a, b, c et d correspondant au cas idéal du séparateur de polarisation qui comporte un coupleur de sortie 3dB purement passif, on suppose que le coupleur est imparfait et que l'on est amené à introduire une variation Df du déphasage pour ramener le coupleur dans un état 3dB.

On fait alors varier d'une quantité DV la tension V appliquée au déphaseur.

Les quantités a, b, c et d varient alors respectivement de Da, Db, Dc et Dd.

Pour obtenir la séparation des polarisations, ces variations doivent vérifier les conditions suivantes :

$$Df = Dc - Da = Db - Dd$$

Le déphaseur étant purement actif et de structure push-pull, les variations Da, Db, Dc et Dd vérifient :

$$Da = -Db = -Dc = Dd$$

On voit donc que si la tension V appliquée au déphaseur est modifiée d'une quantité DV telle que :

$$Da = -Dd = -Dc = Dd = -Df/2$$

l'effet de séparation des polarisations est de nouveau obtenu.

On notera que le séparateur objet de la présente invention peut être utilisé en tant que commutateur de polarisations.

Il peut être en effet intéressant de pouvoir commuter les deux polarisations TE et TM entre les deux sorties du coupleur utilisé dans la présente invention.

Le moyen le plus simple pour cela est de remplacer les quantités a, b, c et d par les quantités opposées, c'est-à-dire, dans le cas du séparateur de la figure 8, d'inverser la tension appliquée au déphaseur, les moyens 77 étant alors prévus à cet effet.

Il faut alors également inverser la tension de commande qui est appliquée au coupleur 70, les moyens 83 étant alors prévus à cet effet dans le cas du séparateur de la figure 8.

On voit donc bien que l'on peut utiliser le séparateur objet de la présente invention en tant que commutateur de polarisations.

Ceci suppose tout de même que les longueurs de couplage et les intégrales de recouvrement électro-optique correspondant aux modes TE et TM soient identiques.

A titre purement indicatif et nullement limitatif, on peut réaliser un séparateur conforme à l'invention, à déphaseur purement actif et à coupleur actif, sur LiNbO$_3$ coupe X, propagation Z, par une technologie classique de diffusion de titane, avec les caractéristiques suivantes :

- température de diffusion : 1000°C
- durée de diffusion : 8 heures
- épaisseur de la couche de titane utilisée comme source de diffusion : 80 nm
- largeur du guide d'onde : 9 micromètres
- longueur de la zone déphasante : 6000 micromètres
- longueur d'interaction du coupleur : 6000 micromètres
- distance bord à bord entre les deux guides du coupleur, mesurée dans la zone d'interaction, distance appelée "coupler gap" dans les publications en langue anglaise : 9 micromètres.

Le séparateur correspondant à ces données a été testé avec des injections respectivement TE et TM, en utilisant un laser HeNe de longueur d'onde 1,52 micromètre et présente des taux de diaphotie ("crosstalk" dans les publications en langue anglaise) inférieurs à -18 dB avec des tensions de polarisation V1 = 3V et V2 = 19V.

D'autres matériaux que LiNbO$_3$ sont utilisables dans la présente invention, par exemple le matériau LiTaO$_3$ en coupe X, propagation Z.

Dans la présente invention, au lieu d'utiliser un matériau du type LiNbO$_3$ ou LiTaO$_3$ en coupe X, propagation Z, on peut utiliser ce matériau en coupe Y, propagation Z.

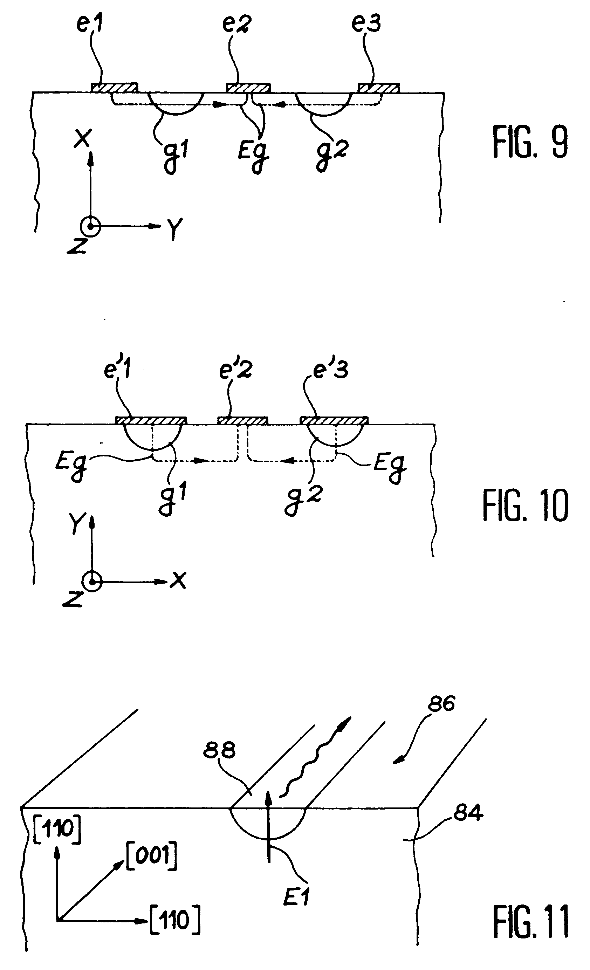

Dans les deux cas, il faut que le champ électrique Eg appliqué aux guides g1, g2 du séparateur (figures 9 et 10) soit dirigé suivant l'axe Y.

Dans le cas d'une coupe X, les électrodes du séparateur, telles que les électrodes e1, e2, e3 (figure 9), doivent donc permettre d'appliquer un champ électrique parallèle à la surface du matériau, sur laquelle est réalisé le séparateur.

On voit sur la figure 9 que ces électrodes e1, e2, e3 peuvent être disposées à la surface du matériau et de part et d'autre des guides g1, g2.

Dans le cas d'une coupe Y, les électrodes du séparateur, telles que les électrodes e'1, e'2, e'3 (figure 10), doivent permettre d'appliquer un champ électrique Eg qui est perpendiculaire à la surface du matériau, sur laquelle est réalisé le séparateur.

On voit sur la figure 10 que ces électrodes e'1, e'2, e'3 peuvent être disposées à la surface du matériau, les électrodes e'1 et e'3 étant sur les guides g1 et g2 et l'électrode e'2 étant entre ces guides.

Enfin, dans la présente invention, d'autres matériaux que ceux qui appartiennent à la famille de LiNbO$_3$ sont utilisables.

On peut réaliser un séparateur conforme à l'invention sur un substrat fait de tout matériau qui permet d'induire des variations opposées DN et -DN respectivement sur l'indice de réfraction associé au mode TE et sur l'indice de réfraction associé au mode TM (ces modes TE et TM correspondant à l'onde lumineuse qui arrive à l'entrée du séparateur).

Ainsi peut-on utiliser l'arséniure de Gallium GaAs qui est un semiconducteur faisant partie du groupe de symétrie cristalline $\overline{4}3$ m cubique.

A titre d'exemple, on utilise un substrat 84 (figure 11) en GaAs, la face 86 de ce substrat, sur laquelle est réalisé le séparateur dont on voit une partie 88 sur la figure 11, est perpendiculaire à l'axe cristallographique $|\overline{1}10|$, chaque champ électrique E1 nécessaire au fonctionnement du séparateur est appliqué suivant l'axe $|\overline{1}10|$, donc perpendiculairement au substrat, la direction de propagation de la lumière guidée est parallèle à l'axe $|001|$ ; dans ces conditions, le mode TM est polarisé suivant l'axe $|\overline{1}10|$ et le mode TE est polarisé suivant l'axe $|110|$.

Dans cet exemple, les indices de réfraction $N_{TE}$ et $N_{TM}$ qui sont respectivement associés aux modes TE et TM, ont pour expressions :

$$N_{TE} = n_0 - 1/2.n_0^3.r_{41}.|E1|$$
$$N_{TM} = n_0 + 1/2.n_0^3.r_{41}.|E1|$$

où $|E1|$ représente le module de E1, $r_{41}$ représente le seul coefficient non nul du tenseur électro-optique de GaAS et $n_0$ représente la valeur commune à $N_{TE}$ et $N_{TM}$ en l'absence de champ E1.

On constate que les variations de $N_{TE}$ et $N_{TM}$, induites par effet électro-optique, sont opposées.

## DOCUMENTS CITES

(1) GRANESTRAND, THYLEN, STOLTZ, Electron. Lett., 24, n°18, 1142 (1988), "Polarisation independent switch and polarisation splitter employing delta beta and delta kappa modulation"

(2) PAPUCHON, ROY, OSTROWSKY, Appl. Phys. Lett., 31, 266 (1977), "Electrically active optical bifurcation : BOA"

(3) FINAK, YIP, Opt. Quant. El., 17, 15 (1985)

(4) FUJII, HIDAKA, Proc. 4th IOOC, TOKYO, (1983) 29A1-4, "LiNbO$_3$ optical waveguide fabricated by the ion-exchange technique and its application to TE/TM mode splitter"

(5) CHUNG, CHIANG, Optics and Lasers Technology, avril 1983, p.83 à 90

(6) BOURBIN, ENARD, WERNER, VATOUX, PAPUCHON, 5th International Conference on Integrated Optics, ECIO'89, "A polarisation splitter in integrated optics".

**Revendications**

1. Séparateur de polarisations pour lumière guidée, réalisé sur un substrat (14), séparateur caractérisé en ce qu'il comprend :
    - un embranchement en Y passif (66), à une entrée et deux sorties, apte à séparer en deux ondes de même amplitude et en phase entre elles, une onde lumineuse d'entrée qui arrive à l'entrée de l'embranchement en Y et qui est une combinaison de deux modes optiques guidés, à savoir un mode transverse électrique TE et un mode transverse magnétique TM,

- un déphaseur actif (68) à deux bras comportant des électrodes (72,74,76) et ayant respectivement deux entrées, qui prolongent respectivement les deux sorties de l'embranchement en Y, et deux sorties, ce déphaseur étant apte à induire un déphasage F du mode TE qui se propage dans un des bras par rapport au mode TE qui se propage dans l'autre bras et un déphasage -F du mode TM qui se propage dans ledit bras par rapport au mode TM qui se propage dans ledit autre bras, le substrat étant fait d'un matériau qui permet d'induire des variations opposées DN et -DN respectivement sur l'indice de réfraction associé au mode TE et sur l'indice de réfraction associé au mode TM, et

- un coupleur directif actif (70) indépendant de la polarisation, apte à constituer un coupleur 3 dB, par une polarisation appropriée des électrodes (78, 80, 82) que comporte ce coupleur, et ayant deux entrées, qui prolongent respectivement les deux sorties du déphaseur, et deux sorties,

de sorte que, lorsque le coupleur constitue un coupleur 3 dB, on obtient le mode TM de l'onde d'entrée à l'une des deux sorties du coupleur et le mode TE de cette onde d'entrée à l'autre sortie du coupleur en polarisant convenablement les électrodes (72, 74, 76) que comporte le déphaseur.

2. Séparateur selon la revendication 1, caractérisé en ce que le déphaseur (68) a une structure push-pull.

3. Séparateur selon l'une quelconque des revendications 1 et 2, caractérisé en ce qu'il est muni de moyens de commande (77, 83) permettant de commuter les modes TM et TE respectivement obtenus aux sorties du coupleur (70).

4. Séparateur selon l'une quelconque des revendications 1 à 3, caractérisé en ce que les variations des indices de réfraction sont induites par un effet électro-optique.

5. Séparateur selon la revendication 4, caractérisé en ce que le matériau du substrat est choisi parmi les matériaux appartenant au groupe de symétrie cristalline trigonal 3 m, le matériau du substrat étant ainsi un matériau uniaxe électro-optique ayant trois axes cristallographiques X, Y, Z perpendiculaires les uns aux autres, les axes X et Y correspondant tous deux à l'indice ordinaire No du matériau tandis que l'axe Z correspond à l'indice extraordinaire Ne de ce matériau, en ce que la face (16) du substrat, sur laquelle est formé le séparateur, est perpendiculaire à l'un des axes X et Y et en ce que le séparateur est formé de telle façon que la lumière guidée se propage parallèlement à l'axe Z dans ce séparateur.

6. Séparateur selon la revendication 5, caractérisé en ce que le matériau du substrat est $LiNbO_3$.

7. Séparateur selon la revendication 6, caractérisé en ce que l'embranchement en Y (66), le déphaseur (68) et le coupleur (70) sont réalisés par diffusion locale de Ti, échange ionique ou implantation, dans $LiNbO_3$.

**Patentansprüche**

1. Polarisationsteiler für Wellenleiterlicht, ausgeführt auf einem Substrat (14), wobei der Teiler dadurch gekennzeichnet ist, daß er umfaßt:
   - eine passive Y-Verzweigung (66) mit einem Eingang und zwei Ausgängen zum Aufteilen in zwei Wellen mit der gleichen Amplitude und in Phase miteinander von einer Eingangslichtwelle, die am Eingang der Y-Verzweigung eintritt und die eine Kombination aus zwei geleiteten optischen Moden darstellt, nämich einer elektrischen Transversalmode TE und einer magnetischen Transversalmode TM,
   - einen aktiven Phasenschieber (68) mit zwei Armen, die Elektroden (72, 74, 76) umfassen und jeweilige Eingänge, welche jeweils die beiden Ausgänge der Y-Verzweigung verlängern, und zwei Ausgänge aufweisen, wobei der Phasenschieber geeignet ist, eine Phasenverschiebung F der TE-Mode, die sich in einem der Arme ausbreitet, in Bezug auf die TE-Mode zu bewirken, die sich in dem anderen Arm ausbreitet, und eine Phasenverschiebung -F der TM-Mode, die sich in diesem einem Arm ausbreitet, in Bezug auf die TM-Mode zu bewirken, die sich in dem anderen Arm ausbreitet, wobei das Substrat aus einem Material hergestellt ist, das die Induktion von entgegengesetzten Variationen DN und -DN jeweils auf den Brechungsindex, welcher der TE-Mode zugeordnet ist, und auf den Brechungsindex erlaubt, welcher der TM-Mode zugeordnet ist, und
   - einen aktiven Richtungskoppler (70), welcher unabhängig von der Polarisation und geeignet ist, um einen 3dB-Koppler durch eine geeignete Polarisation der Elektroden (78, 80, 82) zu bilden, welche den Koppler umfassen, und der zwei Eingänge, die jeweils die Ausgänge des Phasenverschiebers verlängern, und zwei Ausgänge aufweist,

sodaß man mit dem Koppler, da er ein 3dB-Kopppler ist, durch geeignete Polarisation der Elektroden (72, 74, 76), die den Phasenschieber bilden, eine TM-Mode der Eingangswelle an einen der beiden Ausgänge des Kopplers und die TE-Mode dieser Eingangswelle am anderen Ausgang des Kopplers erhält .

2. Polarisationsteiler nach Anspruch 1, **dadurch gekennzeichnet, daß** der Phasenschieber (68) eine Push-Pull-Struktur aufweist.

3. Polarisationsteiler nach einem der Ansprüche 1 und 2, **dadurch gekennzeichnet, daß** er mit einer Steuereinrichtung (77,83) versehen ist, die die jeweilige Umschaltung der TM bzw. TE-Moden erlaubt, welche an den Eingängen des Kopplers (70) erhalten werden.

4. Polarisationsteiler nach einem der Ansprüche 1 bis 3, **dadurch gekennzeichnet, daß** die Variationen der Brechungsindizes durch eine elektrooptische Wirkung eingeführt werden.

5. Polarisationsteiler nach Anspruch 4, **dadurch gekennzeichnet, daß** das Material des Substrates gewählt wird unter den Materialien, welche zu der Gruppe mit trigonaler Kristallsymmetrien 3m gehört, wobei das Material des Substrates ein uniaxiales, elektro-optisches Material ist, das drei kristallographische Achsen X, Y, Z aufweist, die senkrecht aufeinander stehen, wobei die Achsen X und Y beide dem odentlichen Index No des Materials entsprechen, wohingegen die Achse Z dem außerordentlichen Index Ne dieses Materials entspricht, daß die Fläche (16) des Substrates, auf welcher der Teiler gebildet ist, senkrecht zu einer der Achsen X und Y liegt und daß der Teiler in der Weise gebildet ist, daß das Wellenleiterlicht sich parallel zur Achse Z in dem Teiler ausbreitet.

6. Polarisationsteiler nach Anspruch 5, **dadurch gekennzeichnet, daß** das Substrat $LiNbO_3$ ist.

7. Polarisationsteiler nach Anspruch 6, **dadurch gekennzeichnet, daß** die Y-Verzweigung (66), der Phasenschieber (68) und der Koppler (70) durch lokale Diffusion von Ti, Ionenaustauch oder Inplantation in $LiNbO_3$ gebildet sind.

## Claims

1. Polarization beam splitter for guided light produced on a substrate (14) and characterized in that it comprises:

   a passive Y-junction (66) having an input and two outputs and which is able to separate or split into two waves of the same amplitude and in phase with one another, an input light wave reaching the input of the Y-junction and which is a combination of the two guided optical modes, namely a transverse electric mode TE and a transverse magnetic mode TM,

   an active phase shifter (68) with two arms having electrodes (72, 74, 76) and respectively two inputs, which respectively extend the two outputs of the Y-junction and two outputs, said phase shifter being able to induce a phase shift F of the TE mode, which is propagated in one of the arms compared with the TE mode which propagates in the other arm and a phase shift -F of the TM mode, which propagates in the said arm compared with the TM mode propagating in the other arm, the substrate being made from a material making it possible to induce opposite variations DN and -DN respectively on the refractive index associated with the TE mode and on the refractive index associated with the TM mode and

   an active directional coupler (70), independent of the polarization and able to constitute a 3dB coupler by an appropriate polarization of the electrodes (78, 80, 82) of said coupler and having two inputs, which respectively extend the two outputs of the phase shifter, as well as two outputs,

   in such a way that when the coupler constitutes a 3dB coupler the TM mode of the input wave is obtained at one of the two inputs of the coupler and the TE mode of said input wave is obtained at the other output of the coupler by appropriately polarizing the electrodes (72, 74, 76) of the phase shifter.

2. Splitter according to claim 1, characterized in that the phase shifter (68) has a push-pull structure.

3. Splitter according to either of the claims 1 and 2, characterized in that it is provided with control means (77, 83) making it possible to switch the TM and TE modes respectively obtained at the outputs of the coupler (70).

4. Splitter according to any one of the claims 1 to 3, characterized in that the variations of the refractive indices are induced by an electrooptical effect.

5. Splitter according to claim 4, characterized in that the substrate material is chosen from among materials belonging to the 3 m trigonal crystalline symmetry group, the material of the substrate thus being a uniaxial electrooptical material having three crystallographic axes X, Y and Z which are perpendicular to one another, the X and Y axes both corresponding to the ordinary index No of the material, whilst the Z axis corresponds to the extraordinary axis Ne of the material, in that the substrate face (16) on which the splitter is formed is perpendicular to one of the X and Y axes and in that the splitter is formed in such a way that the guided light propagates parallel to the Z axis in the said splitter.

6. Splitter according to claim 5, characterized in that the substrate material is $LiNbO_3$.

7. Splitter according to claim 6, characterized in that the Y-junction (66), the phase shifter (68) and the coupler (70) are produced by local Ti diffusion, on exchange or implantation in $LinbO_3$.

FIG. 1

FIG. 2

FIG. 3

FIG. 4

FIG. 5

FIG. 6

FIG. 7

13

**FIG. 8**

EP 0 442 802 B1

FIG. 9

FIG. 10

FIG. 11